(19) Europäisches Patentamt
European Patent Office
Office européen des brevets

(11) **EP 3 041 630 B1**

(12) **EUROPÄISCHE PATENTSCHRIFT**

(45) Veröffentlichungstag und Bekanntmachung des Hinweises auf die Patenterteilung:
**18.12.2019  Patentblatt 2019/51**

(21) Anmeldenummer: **14777484.8**

(22) Anmeldetag: **19.08.2014**

(51) Int Cl.:
*B22F 1/00* (2006.01)   *B22F 3/02* (2006.01)
*B22F 5/00* (2006.01)   *B22F 9/22* (2006.01)
*B22F 9/20* (2006.01)   *C22C 1/04* (2006.01)
*C22C 27/06* (2006.01)

(86) Internationale Anmeldenummer:
**PCT/AT2014/000159**

(87) Internationale Veröffentlichungsnummer:
**WO 2015/027255 (05.03.2015 Gazette 2015/09)**

(54) **CHROM-HALTIGES PULVER ODER PULVERGRANULAT**

CHROMIUM-CONTAINING POWDER OR GRANULATED POWDER

POUDRE OU POUDRE GRANULÉE CONTENANT DU CHROME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.09.2013  AT 2812013 U**

(43) Veröffentlichungstag der Anmeldung:
**13.07.2016  Patentblatt 2016/28**

(73) Patentinhaber: **Plansee SE**
**6600 Reutte (AT)**

(72) Erfinder:
• **O'SULLIVAN, Michael**
**A-6600 Ehenbichl (AT)**

• SIGL, Lorenz
A-6600 Lechaschau (AT)
• HOSP, Thomas
A-6622 Berwang (AT)

(74) Vertreter: **Ciesla, Bettina**
**Plansee Group Service GmbH**
**Intellectual Property Department**
**6600 Reutte (AT)**

(56) Entgegenhaltungen:
**EP-A1- 2 230 707      DE-A1-102008 042 047**
**US-A1- 2013 129 557**

**Beschreibung**

Die Erfindung betrifft ein Pulver oder Pulvergranulat mit einem Cr-Gehalt > 80 Masseprozent (Ma%), das 2 bis 20 Ma% Fe, optional bis 5 Ma% Dotierstoff und optional bis 2 Ma% O enthält, wobei das Pulver oder Pulvergranulat zumindest teilweise Cr-reiche Bereiche mit einem Cr-Gehalt > 95 Ma% umfasst, die Cr-enthaltende Partikeln bilden. Des Weiteren betrifft die Erfindung die Verwendung des Pulvers oder Pulvergranulats und ein Verfahren zu dessen Herstellung.

Cr-Fe Legierungen, die optional Y enthalten können, werden beispielsweise für Interkonnektoren verwendet. Der Interkonnektor (auch als bipolare Platte oder Stromsammler bezeichnet) ist eine wichtige Komponente einer Festelektrolyt-Hochtemperatur-Brennstoffzelle (auch als Festoxid-Brennstoffzelle, Hochtemperatur-Brennstoffzelle oder SOFC (Solid Oxide Fuel Cell) bezeichnet). Eine Festelektrolyt-Hochtemperatur-Brennstoffzelle wird üblicherweise bei einer Betriebstemperatur von 650°C bis 1000°C betrieben. Der Elektrolyt besteht aus einem festen keramischen Werkstoff, der in der Lage ist, Sauerstoffionen zu leiten, für Elektronen jedoch isolierend wirkt. Als Elektrolytwerkstoffe kommt beispielsweise dotiertes Zirkonoxid zum Einsatz. Für Kathode und Anode werden Ionen und Elektronen leitende Keramiken eingesetzt, wie beispielsweise mit Strontium dotiertes Lanthanmanganat (LSM) für die Kathode und ein Ni-Zirkonoxid (dotiert) Cermet für die Anode. Der Interkonnektor ist zwischen den einzelnen Zellen angeordnet, wobei Zellen, optional vorhandene Kontaktschichten und Interkonnektoren zu einem Stack gestapelt werden. Der Interkonnektor verbindet die einzelnen Zellen in Serie und sammelt so die in den Zellen erzeugte Elektrizität. Zudem unterstützt er die Zellen mechanisch und sorgt für eine Trennung und Führung der Reaktionsgase auf der Anoden- und Kathodenseite. Der Interkonnektor ist sowohl oxidierendem als auch reduzierendem Milieu bei hohen Temperaturen ausgesetzt. Dies erfordert eine entsprechend hohe Korrosionsbeständigkeit. Zudem muss der thermische Ausdehnungskoeffizient des Interkonnektors von Raumtemperatur bis zur maximalen Einsatztemperatur gut an den thermischen Ausdehnungskoeffizienten des Elektrolyt-, Anoden- und Kathodenwerkstoffs angepasst sein. Weitere Forderungen sind Gasdichtheit, eine hohe, konstante Elektronenleitfähigkeit sowie eine möglichst hohe thermische Leitfähigkeit bei Einsatztemperatur. Durch die Zugabe von Fe zu Cr ist es möglich, den Wärmeausdehnungskoffizienten der Cr-Legierung an den Wärmeausdehnungskoffizienten der anschließenden Komponente anzupassen. Durch Zulegieren von Y wird die Korrosionsbeständigkeit verbessert. Um eine hohe Funktionalität zu erzielen, ist eine feine Verteilung aller Legierungskomponenten erforderlich. Dies wird beispielsweise dadurch erreicht, dass eine die Legierungselemente enthaltende Pulvermischung in einer Hochenergiemühle beispielsweise 24 bis 48 Stunden mechanisch legiert wird. Nachteilig dabei sind die durch das Mahlen verursachte kantige Pulverform und die hohe Kaltverfestigung und damit hohe Härte des Pulvers, die sich ungünstig auf das Pressverhalten und die Grünfestigkeit auswirken. Zudem ist dieses Verfahren mit hohen Prozesskosten verbunden.

Diese Nachteile zumindest teilweise zu vermeiden, ist das Ziel der EP 1 268 868 (A1), die ein Herstellverfahren für ein Cr-Legierungspulver beschreibt, das beispielsweise Cr, Fe und Y enthält. Dabei wird das Cr-Pulver mit einer Fe - Y Vorlegierung vermengt. Dieses Verfahren liefert Pulver mit deutlich verbessertem Pressverhalten bei reduzierten Prozesskosten. Bei der Herstellung der Fe - Y Vorlegierung mittels einem Inertgasverdüsungsprozess wird zwar das Y feinst im Fe-Pulver verteilt, jedoch nicht Y im Cr oder Fe im Cr. Die für eine hohe Funktionalität erforderliche Homogenisierung des Fe lässt sich nur durch lange Sinterzeiten erreichen. Zudem lassen sich Pulver gemäß der EP 1 268 868 (A1) nur bei hohen Drücken auf eine ausreichend hohe Grünfestigkeit bzw. Dichte verpressen, da das Cr-Pulver üblicherweise aluminothermisch reduziert und mechanisch zerkleinert ist, was mit einer hohen Härte und einer glatten Oberfläche einhergeht.

Die US2013129557 zeigt ein Verfahren zur Herstellung zur Herstellung von Interkonnektoren über Hochgeschwindigkeits-Kompaktion, welche ein nachträgliches Sintern teilweise umgänglich macht. Dazu wird ein Pulver verwendet, das eine Pulvermischung, ein vorgesintertes Pulver oder ein vorlegiertes Pulver enthaltend z.B. Fe und Cr sein kann.

Die EP2230707 zeigt ein Verfahren zur Herstellung von Interkonnektoren unter Verwendung von gemischten, teilweise vorlegierte und/oder vollständig vorlegierten Pulvern enthaltend Cr, Fe, Y.

Die DE102008042047 zeigt ein Verfahren zur Herstellung von Gegenständen aus pulvermetallurgischen Werkstoffen, wobei das Pulver über Mischen eines pulverförmigen Metalloxids mit Bindemittel, Granulieren der Mischung, Entfernen des Bindemittels aus dem Metalloxidgranulat und anschließende Reduktion des Metalloxidgranulats gewonnen wird.

Aufgabe der gegenständlichen Erfindung ist die Bereitstellung eines Pulvers oder Pulvergranulats, das sich mit den üblichen pulvermetallurgischen Methoden kostengünstig zu Bauteilen verarbeiten lässt und in dem die Legierungsbestandteile homogen verteilt sind. Um eine kostengünstige Herstellung und eine hohe Funktionalität des Pulvers oder Pulvergranulats zu gewährleisten, sind eine hohe Rieselfähigkeit des Pulvers oder Pulvergranulats (um problemfreies automatisches Befüllen der Matrize zu gewährleisten), eine gute Verpressbarkeit, eine hohe Grünfestigkeit (um problemfreies Handling des Grünlings zu gewährleisen) und eine homogene Verteilung der Legierungselemente bei möglichst kurzen Sinterzeiten Voraussetzung. Die homogene Verteilung der Legierungselemente wirkt sich unter anderem günstig auf das Korrosionsverhalten und die prozesskonstante Einstellung des Ausdehnungsverhaltens aus. Die gute Verpressbarkeit sollte dabei schon bei im Vergleich zum Stand-der-Technik Pulver vergleichsweise niedrigem Pressdruck erzielbar sein, da sich dies sowohl günstig auf die Investitionskosten (Kosten einer Presse steigt mit zunehmender Presskraft), als auch auf die Werkzeugkosten (geringerer Werkzeugverschleiß) auswirkt. Zudem ist es eine Aufgabe der Erfindung ein Pulver oder Pulvergranulat bereitzustellen, mit dem sich in einfacher und kostengünstiger Weise über pulvermetallurgische Fertigungstechniken ein Bauteil mit hoher Funktionalität (zum Beispiel angepasstem Wärmeausdehnungskoeffizient, hoher Korrosionsbeständigkeit) herstellen lässt. Eine weitere Aufgabe ist die Bereitstellung eines Verfahrens, mit dem sich das erfindungsgemäße Pulver oder Pulvergranulat in einfacher Weise, prozesskonstant und kostengünstig herstellen lässt.

Die Aufgabe wird durch die unabhängigen Ansprüche erfüllt. Besonders vorteilhafte Ausgestaltungsformen der Erfindung sind in den abhängigen Ansprüchen angeführt.

Unter Pulver versteht man dabei eine Vielzahl von Partikeln, wobei ein Partikel wiederum aus Primär- und damit verbundenen Sekundärpartikeln bestehen kann. Ist die Partikelgröße klein, kann es für die weitere pulvermetallurgische Verarbeitung vorteilhaft sein, eine Vielzahl von Pulverpartikeln, die wiederum aus Primär- und Sekundärpartikeln bestehen können, in ein Pulvergranulat überzuführen. Ein Pulvergranulat-Partikel kann daher aus einer Vielzahl von Partikeln bestehen. Diese Partikeln können stoffschlüssig ohne oder mit Vorhandensein eines oder mehrerer weiterer Bestandteil, zum Beispiel einem Binder, miteinander verbunden sein. Die Größe der Pulverpartikel bzw. Pulvergranulat-Partikel wird als Partikelgröße bezeichnet und wird üblicherweise mittels Laserdiffraktometrie gemessen. Die Messergebnisse werden als Verteilungskurve angegeben. Der $d_{50}$ Wert gibt dabei die mittlere Partikelgröße an. $d_{50}$ bedeutet, dass 50% der Partikel kleiner sind als der angegebene Wert.

Das Pulver oder Pulvergranulat gemäß der Erfindung enthält 2 bis 20 Ma% Fe, optional bis 5 Ma% Dotierstoffs, optional bis 2 Ma% O sowie > 80 Ma% Cr und übliche Verunreinigungen. Übliche, prozessbedingte Verunreinigungen sind dabei beispielsweise Si, Al, Ca, V und Na, wobei die jeweiligen Gehalte üblicherweise < 500 µg/g betragen. Liegt der Cr-Gehalt unter 80 Ma% ist für viele Anwendungen eine ausreichend hohe Korrosionsbeständigkeit nicht mehr gewährleistet. Durch die Zugabe von 2 bis 20 Ma% Fe ist es möglich, den Ausdehnungskoeffizienten des Bauteils in einfacher Weise auf viele Anwendungen hin einzustellen, ohne dabei die Korrosionsbeständigkeit in unzulässiger Weise zu verschlechtern. Liegt der Fe-Gehalt unter 2 Ma% weist die Legierung einen, für viele Anwendungen zu niedrigen Ausdehnungskoeffizienten auf. Fe-Gehalte über 20 Ma% wirken sich unter anderem nachteilig auf das Korrosionsverhalten aus. Erfindungsgemäß umfasst das Pulver oder Pulvergranulat Fe-reiche Bereiche mit einem Fe-Gehalt > 40 Ma%, bevorzugt > 60 Ma%. Die Fe-reichen Bereiche liegen wiederum bevorzugt in Form von Fe-enthaltenden Partikeln vor. Da das Ausgangsprodukt bei der Herstellung von Fe-Pulver Fe-Oxid ist, ist Fe-Oxid Pulver kostengünstig verfügbar. Liegen die Fe-reichen Bereiche in Form von Fe-Oxid vor, lässt sich dieses durch eine thermische Behandlung des Pulvers oder des gepressten Bauteils (zum Beispiel integriert in den Sinterprozess) in reduzierendem Milieu in einfacher und kostengünstiger Weise reduzieren. Liegt Fe in ungebundener/elementarer Form vor, beträgt der bevorzugte Fe-Gehalt der Fe-reichen Bereiche > 90 Ma%, besonders bevorzugt > 98 Ma%.

Des Weiteren kann das Pulver oder Pulvergranulat optional bis 5 Ma% Dotierstoff enthalten. Der bevorzugte Dotierstoffgehalt ist dabei 0,005 bis 5 Ma%. Bevorzugt wird zumindest ein Dotierstoff der Gruppe bestehend aus Sc, Y, Lanthanoide, Ti, Zr und Hf ausgewählt. Der erfindungsgemäße Dotierstoff bewirkt bei Cr eine deutliche Verbesserung des Hochtemperatur-Korrosionsverhaltens. Gehalte über 5 Ma% bewirken keine weitere signifikante Steigerung der Korrosionsbeständigkeit und wirken sich nachteilig auf die Verpressbarkeit und die Kosten aus. Unter 0,005 Ma% ist das Korrosionsverhalten gegenüber einem Werkstoff ohne Dotierstoff nur geringfügig verbessert. Ein besonders effizienter Dotierstoff ist Y, wobei der besonders bevorzugte Gehalt bei 0,01 bis 1 Ma% liegt.

Eine bevorzugte Legierungszusammensetzung ist 2 bis 20 Ma% Fe, optional bis 5 Ma% zumindest eines Dotierstoffs ausgewählt aus der Gruppe bestehend aus Sc, Y, Lanthanoide, Ti, Zr und Hf, optional bis 2 Ma% O sowie Rest Cr und übliche Verunreinigungen, wobei der Cr-Gehalt > 80 Ma% beträgt. Eine weitere bevorzugte Legierungszusammensetzung ist 2 bis 20 Ma% Fe, 0,005 bis 5 Ma% zumindest eines Dotierstoffs ausgewählt aus der Gruppe bestehend aus Sc, Y, Lanthanoide, Ti, Zr und Hf, 0,002 bis 2 Ma% O sowie Rest Cr und übliche Verunreinigungen, wobei der Cr-Gehalt > 80 Ma% beträgt. Eine weitere bevorzugte Legierungszusammensetzung ist 2 bis 20 Ma% Fe, 0,002 bis 2 Ma% O, sowie Rest Cr und übliche Verunreinigungen, wobei der Cr-Gehalt > 80 Ma% beträgt. Eine weitere bevorzugte Legierung besteht aus 3 bis 10, besonders bevorzugt 3 bis 7 Ma% Fe, optional bis 2 Ma% O sowie Rest Cr und übliche Verunreinigungen, wobei der Cr-Gehalt > 80 Ma% beträgt. Eine weitere besonders bevorzugte Legierung besteht aus 3 bis 10, besonders bevorzugt 3 bis 7 Ma% Fe, 0,005 bis 5 Ma% Y, 0,002 bis 2 Ma% O sowie Rest Cr und übliche Verunreinigungen, wobei der Cr-Gehalt > 80 Ma% beträgt.

Das Pulver oder Pulvergranulat weist dabei zumindest teilweise Cr-reiche Bereiche mit einem Cr-Gehalt > 95 Ma% auf, die Cr-enthaltende Partikel bilden. Die Cr-reichen Bereiche bestehen zumindest teilweise aus einer Cr-reichen Phase. Cr-reicher Bereich und Cr-reiche Phase werden im Folgenden synonym verwendet. Eine Cr-reiche Phase mit einem Cr-Gehalt > 95 Ma% bedeutet, dass der Anteil an gelösten Elementen ≤ 5 Ma% ist. Bevorzugt liegt der Großteil (>90 Ma%) des Cr in Form von Cr-reicher Phase mit Cr > 95 Ma% vor. Bereiche mit niedrigerem Cr-Gehalt können dabei die Übergangszonen Cr-reicher Bereich / Fe-reicher Bereich sein. In der Cr-reichen Phase können andere Phasenbestandteile, beispielsweise der Dotierstoff, eingelagert sein. Diese werden bei der Auswertung des Cr-Gehalt in der Cr-reichen Phase nicht berücksichtigt. Liegt der Gehalt an gelösten Elementen > 5 Ma% (Cr-Gehalt < 95 Ma%) weisen diese Bereiche eine zu hohe Härte auf, was sich negativ auf das Pressverhalten, die Werkzeugstandzeit und die Investitionskosten für eine Presse auswirkt.

Die Cr-reichen Bereiche bilden Partikel (in weiterer Folge auch Cr-enthaltende Partikel oder nur Partikel genannt). Wie erwähnt kann ein Granulatpartikel mehrere Partikeln umfassen. Erfindungswesentlich ist, dass die Cr-enthaltenden Partikel oder Granulatpartikel zumindest teilweise Poren aufweisen. Bevorzugt enthalten dabei im Falle von Granulatpartikeln auch die Partikel, aus denen das Granulat aufgebaut ist, Poren. In günstiger Weise ist der Mengenanteil von Partikeln oder Granulatpartikeln mit Poren > 30 Ma%, in sehr günstiger Weise > 50 Ma%, bevorzugt > 70 Ma% und besonders bevorzugt > 90 Ma%.

Bevorzugt weisen die Cr-enthaltende Partikel eine mittlere, mittels quantitativer Bildanalyse bestimmte Porosität > 20 Vol% auf. Besonders bevorzugt beträgt die mittlere Porosität > 40 Vol%, insbesondere bevorzugt > 60 Vol%. Es konnten Werte von 85 Vol% und darüber erreicht werden. Bevorzugte Bereiche für die Porosität P sind 20 Vol% < P < 85 Vol%, 40 Vol% < P < 85 Vol% und 60 Vol% < P < 85 Vol%.

Die Bestimmung der mittleren Porosität folgt dabei folgender Arbeitsanweisung. Es werden zunächst Pulverschliffe angefertigt. Das Pulver wird hierzu in Epoxidharz eingebettet. Nach einer Aushärtezeit von 8 Stunden werden die Proben metallografisch präpariert, d.h. es kann später eine Untersuchung über den Pulverquerschliff hinweg erfolgen. Die Präparation umfasst die Schritte: Schleifen bei 150-240 N mit festgebundenem SiC- Papier mit den Körnungen 800, 1000 und 1200; Polieren mit Diamant-Suspensionen mit 3 $\mu$m Körnung; finales Polieren mit einer OPS (Oxid-Polier-Suspension) der Körnung 0,04 $\mu$m; Reinigung der Proben im Ultraschallbad und Trocknung der Proben. Anschließend werden je Probe zehn Bilder von unterschiedlichen, repräsentativen Körnern angefertigt. Dies geschieht mittels Rasterelektronenmikroskopie ("Ultra Plus 55" der Firma Zeiss) unter Verwendung eines 4-Quadranten-Ring-Detektors zur Detektion rückgestreuter Elektronen (BSE: back-scattered-electrons). Die Anregungsspannung beträgt 20 kV, der Kippwinkel 0°. Die Aufnahmen werden scharf gestellt, die Auflösung soll zumindest 1024x768 Pixel für eine korrekte Bildanalyse betragen. Der Kontrast wird derart gewählt, dass sich die Poren deutlich von der metallischen Matrix abheben. Die Vergrößerung für die Aufnahmen wird derart gewählt, dass jedes Bild ein Korn enthält. Daraus ergeben sich im vorliegenden Fall Vergrößerungen von 100x und 300x. Die quantitative Bildanalyse wird mit der Software Image Access durchgeführt. Es wird das Modul "Partikel Analyse" genutzt. Jede Bildanalyse folgt den Schritten: Einstellung eines Graustufenschwellwertes in der Art, dass offenes Porenvolumen in den Körnern erkannt wird; Festlegung des Messrahmens, in diesem Fall ein maximal großer Kreis/Rechteck innerhalb eines Kornes (Fläche 0,02 - 0,5 mm$^2$); Detektionseinstellung: Messung nur in ROI, Einschließen des Bildrands, Abschneiden des ROI durch Objekt. Es werden weder bei der Aufnahme noch bei der Analyse der Aufnahmen Filterfunktionen verwendet. Da die Poren in einem Rückstreuelektronenbild dunkler erscheinen als die metallische Matrix werden bei der Detektionseinstellung die "dunklen Objekte" als Poren definiert. Nachdem die 10 Bilder einzeln analysiert worden sind, erfolgt eine statistische Auswertung über die Daten hinweg. Daraus wird der mittlere Flächenanteil der Poren (%) bestimmt, der der mittleren Porosität in Volumenprozent gleichgesetzt werden kann.

Bei den erfindungsgemäßen Poren handelt es sich bevorzugt um zumindest teilweise offene Poren. Unter offenen Poren sind dabei Poren zu verstehen, die über Porenkanäle mit der Oberfläche verbunden sind. In günstiger Weise ist der Volumenanteil von offenen Poren bezogen zur Gesamtporosität > 30 Vol%, in sehr günstiger Weise > 50 Vol%, bevorzugt > 70 Vol% und besonders bevorzugt > 90 Ma%. Diese offenen Poren sind wiederum bevorzugt miteinander vernetzt. Die Vorteile dieser Pulvermorphologie werden in nachfolgenden Textpassagen noch im Detail behandelt.

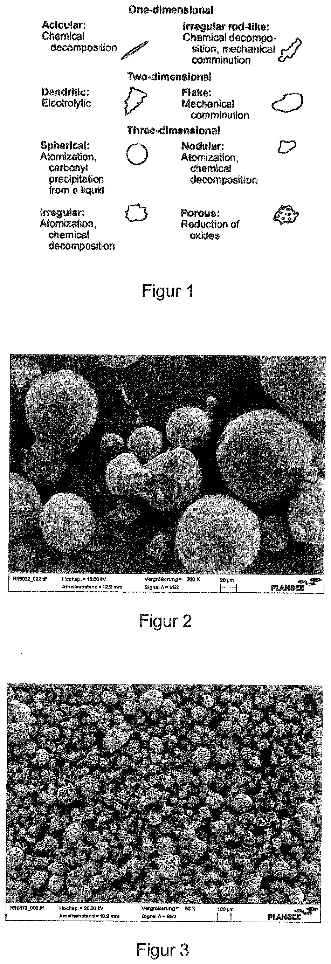

Die Pulverform wird üblicherweise gemäß der Einteilung nach ASM (ASM Handbook, Vol.7, Powder Metallurgy, p472) in nadelförmig (acicular), unregelmäßig-stäbchenförmig (irregular rod-like), dendritisch (dendritic), flockenförmig (flake), kugelförmig (spherical), nodulär (nodular), unregelmäßig (irregular) und porös (porous) klassifiziert (siehe Figur 1). Gemäß dieser Einteilung weisen die aus Cr-reichen Bereichen gebildeten Partikeln / Granulatpartikeln zumindest teilweise eine poröse Form auf. In günstiger Weise ist der Volumenanteil von mit porös klassifizierter Partikel / Granulatpartikeln > 30 Vol%, in sehr günstiger Weise > 50 Vol%, bevorzugt > 70 Vol% und besonders bevorzugt > 90 Ma%. In besonderer Weise bevorzugt weisen dabei nahezu (> 99 Ma%) alle Partikeln / Granulatpartikeln eine poröse Form auf. Von der porösen Pulverform können beispielsweise Partikel abweichen, die durch Zerbrechen ehemals poröser Partikel / Granulatpartikel entstanden sind (beispielsweise Feinanteil des Pulvers).

Des Weiteren weisen die Cr-enthaltenden Partikel bevorzugt bei einer mittels Laserdiffraktometrie gemessenen Partikelgröße $d_{50}$ von > 20 $\mu$m eine mittels BET gemessene Oberfläche > 0,05 m$^2$/g auf. Weitere bevorzugte Varianten sind: $d_{50}$ > 50 $\mu$m und BET Oberfläche > 0,05 m$^2$/g, $d_{50}$ > 70 $\mu$m und BET Oberfläche >

$0.05$ m$^2$/g, $d_{50}$ > 90 $\mu$m und BET Oberfläche > 0,05 m$^2$/g, $d_{50}$ > 110 $\mu$m und BET Oberfläche > 0,05 m$^2$/g, $d_{50}$ > 30 $\mu$m und BET Oberfläche > 0,07 m$^2$/g, $d_{50}$ > 50 $\mu$m und BET Oberfläche > 0,07 m$^2$/g, $d_{50}$ > 70 $\mu$m und BET Oberfläche > 0,07 m$^2$/g, $d_{50}$ > 90 $\mu$m und BET Oberfläche > 0,07 m$^2$/g, $d_{50}$ > 110 $\mu$m und BET Oberfläche > 0,07 m$^2$/g, $d_{50}$ > 30 $\mu$m und BET Oberfläche > 0,09 m$^2$/g, $d_{50}$ > 50 $\mu$m und BET Oberfläche > 0,09 m$^2$/g, $d_{50}$ > 70 $\mu$m und BET Oberfläche > 0,09 m$^2$/g, $d_{50}$ > 90 $\mu$m und BET Oberfläche > 0,09 m$^2$/g, sowie $d_{50}$ > 110 $\mu$m und BET Oberfläche > 0,09 m$^2$/g. Dies wird insbesondere durch die hohe innere Porosität der Partikel erzielt. Die BET-Messung erfolgt dabei gemäß Norm (ISO 9277:1995, Messbereich: 0,01 - 300 m$^2$/g; Gerät: Gemini II 2370, Ausheiztemperatur: 130°C, Ausheizzeit: 2 Stunden; Adsorptiv: Stickstoff, volumetrische Auswertung über Fünfpunktbestimmung).. Der $d_{50}$ Wert wird mittels Laserdiffraktometrie unter Anwendung der Norm (ISO13320 (2009)) gemessen.

Die Poren können zumindest bereichsweise leer, teilweise oder vollständig gefüllt sein. Bevorzugt ist dabei zumindest ein Teil der Poren zumindest teilweise mit Fe und/oder Fe-Oxid gefüllt. Besonders bevorzugt ist dabei zumindest ein Teil der Poren zumindest teilweise mit Fe gefüllt. Die leeren und/oder teilweise gefüllten Poren sind bevorzugt zumindest bereichsweise offenporig vernetzt. Die Poren können zumindest bereichsweise auch vollständig gefüllt sein.

Die erfindungsgemäßen Pulver und Pulvergranulate weisen ausgezeichnete Presseigenschaften auf. Des Weiteren kann im Vergleich zu Stand-der-Technik Pulver die Sinterzeit deutlich reduziert werden. Wie in den Beispielen gezeigt, ist trotz reduzierter Sinterzeit die Homogenität der Legierung deutlich verbessert. Zudem lassen sich die Dotierstoffe in einfacher Weise, wie später näher ausgeführt, in sehr feiner Form (Dotierstoffe in Form von Teilchen mit sehr kleiner Größe (=Dispersoidgröße), bevorzugt < 5 $\mu$m) sehr gleichmäßig (kleiner mittlerer Teilchenabstand bevorzugt < 50 $\mu$m) verteilen.

Bevorzugt enthält das Pulver oder Pulvergranulat wie erwähnt bis 2 Ma% O. Besonders bevorzugt liegt der O-Gehalt bei 0,002 bis 2 Ma%. O-Gehalte von 0,5 bis 2 Ma% treten insbesondere dann auf, wenn der Dotierstoff und/oder Fe in oxidierter Form vorliegt. Ein sehr vorteilhaftes Pressverhalten kann erzielt werden, wenn die Cr-reichen Bereiche eine mittlere Nanohärte$_{HIT\ 0,005/5/1/5}$ nach EN ISO 14577-1 (Ausgabe 2002, Berkovich-Eindringkörper und Auswerteverfahren nach Oliver und Pharr) von $\leq$ 4 GPa aufweisen. Der Härtewert bezieht sich dabei auf ein Pulver oder Pulvergranulat, das vorzugsweise keiner zusätzlichen Nachbehandlung, wie beispielsweise einer Glühung, unterzogen wird. Bevorzugt beträgt die Nanohärte $\leq$ 3,5 GPa. Bei sehr hohen Anforderungen, beispielsweise für sehr dünnwandige Bauteile, bewährt sich eine Nanohärte$_{HIT\ 0,005/5/1/5}$ von $\leq$ 3 GPa. Bei sehr reiner Cr-Phase lassen sich Metallpulver mit einer Nanohärte$_{HIT\ 0,005/5/1/5}$ von in etwa 1,5 GPa realisieren.

Dotierstoff und/oder Fe können wie erwähnt in elementarer und/oder oxidierter Form vorliegen. Während Fe-Oxid bevorzugt bei der pulvermetallurgischen Weiterverarbeitung, zum Beispiel beim Sintern, reduziert wird, verbessert der Dotierstoff auch in oxidierter Form das Korrosionsverhalten.

Beim Mischvorgang, beispielsweise in einem Diffusions-, einem Konvektions- oder in einem Schermischer, oder einem Mahlvorgang mit geringem Energieeintrag (um die poröse Pulverform zumindest teilweise zu erhalten) wird Fe- und/oder Fe-Oxid-Pulver dem Cr-Pulver zugemischt. Als Cr-Pulver wird eine Vielzahl von aus Cr-reichen Bereichen gebildeten Partikeln bezeichnet. Bevorzugt wird dabei ein Fe-haltiges Pulver verwendet, das eine kleinere Partikelgröße als das Cr-Pulver ausweist. Damit kann das Fe-haltige Pulver zumindest teilweise in die Poren des Cr-Pulvers eingebracht werden. Dadurch ist es möglich, Fe sehr gleichmäßig und in feiner Form zu verteilen, ohne dabei ein Cr-Pulver mit kleiner Partikelgröße und entsprechend schlechtem Fließverhalten (Rieselfähigkeit) verwenden zu müssen. Ein gutes Fließverhalten ist speziell bei automatisch beschickten Pressen eine Voraussetzung für einen wirtschaftlich führbaren Prozess. Zudem ist es mit dem erfindungsgemäßen Pulver oder Pulvergranulat möglich, eine homogene Fe-Verteilung zu erreichen, ohne dass Fe dabei in der Cr-Phase in Lösung geht. Fe und/oder Fe-Oxid kann jedoch auch auf der Oberfläche der Cr-Partikel oder zwischen den Cr-Partikeln vorliegen. Beim Pressvorgang kann das fließfähige Fe-Pulver zumindest teilweise in die Poren eindringen. Geringere Mengenanteile von Fe und/oder Fe-Oxid können auch in den Cr-reichen Bereichen eingelagert sein.

Für viele Anwendungen ist es ausreichend, Pulver ohne Dotierstoff zu verwenden. Ist jedoch ein hoher korrosionsverbessernder Effekt gewünscht, ist es vorteilhaft, Pulver mit Dotierstoff zu verwenden. Dabei ist es wiederum vorteilhaft, wenn der Dotierstoff in feiner Verteilung vorliegt. Bevorzugt erfolgt die Einbringung des Dotierstoffs bereits zum Cr-Oxid oder Cr-Hydroxid, den Ausgangsstoffen für die Herstellung des Cr-Pulvers. Der Dotierstoff kann dabei in fester oder in gelöster Form, beispielsweise als Nitrat- oder Oxalatlösung, zugemischt werden. Der Dotierstoff liegt dabei bevorzugt in oxidierter Form vor. Da die Oxide des Dotierstoffs thermodynamisch stabiler als beispielsweise $Cr_2O_3$ sind, werden diese während der Reduktion des Cr-Oxids nicht reduziert. Damit kommt es auch nicht zu einem unzulässig hohen Lösungsvorgang des Dotierstoffs in der Cr-Phase. Durch die Zugabe des Dotierstoffs vor der Reduktion des Cr-Oxids ist es möglich, den Dotierstoff zumindest teilweise in den Cr-reichen Bereichen einzulagern, was sich sehr vorteilhaft auf das Korrosionsverhalten auswirkt. Die Dotierstoffe können jedoch auch in den Poren eingelagert oder auf der Oberfläche der Partikel angeordnet sein. Aufgrund der erfindungsgemäßen Struktur des Pulvers oder Pulvergranulats führt auch dies zu einer sehr hohen Korrosionsbeständigkeit.

Um eine prozesssichere und wirtschaftliche Weiterverarbeitung zu gewährleisten, ist es vorteilhaft, wenn das Pulver oder das Pulvergranulat eine Partikelgröße / Granulatgröße von 10 μm < $d_{50}$ < 800 μm aufweist. Weitere vorteilhafte Bereiche sind: 30 μm < $d_{50}$ < 800 μm, 50 μm < $d_{50}$ < 800 μm, 70 μm < $d_{50}$ < 800 μm, 90 μm < $d_{50}$ < 800 μm, 110 μm < $d_{50}$ < 800 μm, 30 μm < $d_{50}$ < 300 μm, 50 μm < $d_{50}$ < 300 μm, 70 μm < $d_{50}$ < 300 μm, 90 μm < $d_{50}$ < 300 μm, 110 μm < $d_{50}$ < 300 μm, 30 μm < $d_{50}$ < 150 μm, 50 μm < $d_{50}$ < 150 μm, 70 μm < $d_{50}$ < 150 μm, 90 μm < $d_{50}$ < 150 μm und 110 μm < $d_{50}$ < 150 μm. Der $d_{50}$ Wert wird dabei mittels Laserdiffraktometrie unter Anwendung der Norm (ISO13320 (2009)) gemessen. Werte im unteren Größenbereich können dabei ohne einen zusätzlichen Granulierschritt erzielt werden. Erfolgt die Herstellung ohne Granulierung wird das hergestellte Produkt als Pulver bezeichnet. Werte im oberen $d_{50}$-Bereich können erzielt werden, wenn beispielsweise das Ausgangsprodukt (z.B. Cr-Oxid oder Cr-Hydroxid, optional mit Dotierstoff), ein Zwischenprodukt (z.B. Cr-Metallpulver, optional mit Dotierstoff) oder Cr-Metallpulver + Fe-haltiges Pulver (optional mit Dotierstoff) mit üblichen Verfahren granuliert wird. Ein derartig hergestelltes Produkt wird als Pulvergranulat bezeichnet.

Des Weiteren ist es vorteilhaft, wenn das Pulver oder Pulvergranulat bei einem Pressdruck von 550 MPa auf eine Dichte von zumindest 75 % und bei einem Pressdruck von 850 MPa auf eine Dichte von zumindest 78 %verdichtbar ist. Diese Werte werden erreicht, wenn das Pulver eine hohe Porosität und geringe Härte aufweist. Die Grünfestigkeit gemessen nach ASTM B312-09 beträgt bei einem Pressdruck von 550 MPa bevorzugt zumindest 5 MPa. In Bezug auf die Grünfestigkeit wirkt sich insbesondere die erfindungsgemäße Partikelform günstig aus, da sich die porösen Teilchen beim Pressvorgang ineinander verkrallen. Damit ist es möglich, mit dem erfindungsgemäßen Pulver oder Pulvergranulat funktionale Bauteile mit hoher Dichte und Grünfestigkeit herzustellen. Für die Einstellung einer hohen Sinterdichte ist es zudem vorteilhaft, wenn das Pulver oder Pulvergranulat eine Oberfläche nach BET von ≥ 0,05 m²/g aufweist. Weitere bevorzugte Varianten sind: ≥ 0,05 m²/g, ≥ 0,07 m²/g, ≥ 0,09 m²/g und ≥ 0,1 m²/g.

Das erfindungsgemäße Pulver oder Pulvergranulat eignet sich in besonderer Weise zur pulvermetallurgischen Herstellung eines Bauteils, insbesondere eines Interkonnektors. Pulvermetallurgische Fertigungsverfahren umfassen dabei beispielsweise Press- / Sinterverfahren, druckunterstützte Sinterverfahren, MIM, Pulverspritzverfahren und generative Fertigungsverfahren (zum Beispiel 3d-Printing).

Die erfindungsgemäße Aufgabe wird auch durch ein Verfahren zur Herstellung eines Pulvers oder Pulvergranulats erfüllt. Dieses Verfahren umfasst die Reduktion zumindest einer Verbindung der Gruppe bestehend aus Cr-Oxid und Cr-Hydroxid, optional mit einer beigemischten festen Kohlenstoffquelle, unter zumindest zeitweiser Einwirkung von Wasserstoff und Kohlenwasserstoff. Als Chromoxid oder Chromhydroxid kommen bevorzugt Cr(III)-Verbindungen in Pulverform in Frage, beispielsweise $Cr_2O_3$, CrOOH, Cr(OH)$_3$ oder Mischungen aus Chromoxiden und Chromhydroxiden. Die bevorzugte Chromquelle ist $Cr_2O_3$. Für einen hohen Reinheitsgrad im Endprodukt ist bevorzugt vorgesehen, dass das verwendete $Cr_2O_3$ zumindest Pigmentqualität besitzt.

Bevorzugt wird die Verbindung der Gruppe bestehend aus Cr-Oxid und Cr-Hydroxid, optional mit einer beigemischten festen Kohlenstoffquelle, auf eine Temperatur $T_R$ mit 1100°C ≤ $T_R$ ≤ 1550°C erhitzt und optional auf dieser Temperatur gehalten. Temperaturen < 1100°C bzw. > 1550°C führen zu verschlechterten Pulvereigenschaften, bzw. zu einem unwirtschaftlicheren Verfahren. Die Reaktion verläuft für industrielle Zwecke dann besonders gut ab, wenn Temperaturen $T_R$ von etwa 1200 °C bis 1450°C gewählt werden.

Während im unteren erfinderischen Temperaturbereich sehr lange Haltezeiten auf $T_R$ erforderlich sind, um einen vorteilhaften Reduktionsgrad von 90% einzustellen, kann im oberen erfinderischen Temperaturbereich die Haltezeit sehr kurz gewählt werden oder überhaupt entfallen. Der Reduktionsgrad R ist definiert als das Verhältnis der bis zum Zeitpunkt t im Chromoxid bzw. Chromhydroxid abgebauten Stoffmenge an Sauerstoff, bezogen auf die insgesamt vorhandene Sauerstoffmenge in der unreduzierten Chromverbindung:

$$\%red = \left( Mred,O \middle/ Ma,O \right) \; x \; 100$$

%red     Reduktionsgrad in %
Mred, O     Masse [g] O im reduzierten Pulver
Ma, O     Masse [g] O im Pulveransatz (vor der Reduktion)

Basierend auf den Beispielen kann der Fachmann in einfacher Weise die für seinen Ofen (Durchlaufofen, Batchofen, maximal erreichbare Ofentemperatur,...) optimale Kombination aus Temperatur und Zeit bestimmen. Bevorzugt wird die Reaktion über zumindest 30%, insbesondere bevorzugt zumindest 50% der Reaktionszeit im Wesentlichen konstant (isotherm) auf $T_R$ gehalten.

Die Anwesenheit von Kohlenwasserstoff gewährleistet, dass über einen chemischen Transportprozess Pulver mit den erfindungsgemäßen Eigenschaften gebildet wird. Der Gesamtdruck der Reaktion beträgt in vorteilhafter Weise 0,95 bis 2 bar. Drücke über 2 bar wirken sich nachteilig auf die Wirtschaftlichkeit des Verfahrens aus. Drücke unter 0,95 bar wirken sich nachteilig auf den sich einstellenden Kohlenwasserstoff-Partialdruck aus, was sich wiederum sehr ungünstig auf die Transportprozesse über die Gasphase auswirkt, die zur Einstellung der erfindungsgemäßen Pulvereigenschaften (zum Beispiel Härte, Grünfestigkeit, spezifische Oberfläche) von großer Bedeutung sind. Zudem wirken sich Drücke unter 0,95 bar nachteilig auf die Prozesskosten aus.

Wie der Kohlenwasserstoff-Partialdruck in einfacher Weise eingestellt werden kann, geht aus den Beispielen hervor. In vorteilhafter Weise liegt der Kohlenwasserstoff als $CH_4$ vor. Bevorzugt beträgt zumindest während des Aufheizvorgangs zumindest zeitweise der Kohlenwasserstoff-Partialdruck 5 bis 500 mbar. Ein Kohlenwasserstoff-Partialdruck < 5 mbar wirkt sich ungünstig auf die Pulvereigenschaften, insbesondere die Grünfestigkeit aus. Ein Kohlenwasserstoff-Partialdruck > 500 mbar führt zu einem hohen C-Gehalt im reduzierten Pulver. Die Restgasatmosphäre ist dabei bevorzugt Wasserstoff. Bevorzugt erfolgt die Einwirkung von Wasserstoff und Kohlenwasserstoff zumindest im Temperaturbereich 800°C bis 1050°C. Bevorzugt beträgt in diesem Temperaturbereich der Kohlenwasserstoff-Partialdruck 5 bis 500 mbar. Die sich aus den Ausgangsstoffen bildende Reaktionsmischung befindet dabei bevorzugt zumindest 45 min., insbesondere bevorzugt zumindest 60 min. in diesem Temperaturbereich. Diese Zeit schließt sowohl den Aufheizvorgang als auch etwaige isotherme Haltephasen in diesem Temperaturbereich ein. Mit den erfinderischen Verfahrensbedingungen ist gewährleistet, dass sich bei Temperaturen bevorzugt < $T_R$ zumindest eine Verbindung ausgewählt aus der Gruppe bestehend aus Cr-Oxid und Cr-Hydroxid unter Einwirkung von Wasserstoff und Kohlenwasserstoff zumindest teilweise zu Chromkarbid umsetzt. Bevorzugte Chromkarbide sind $Cr_3C_2$, $Cr_7C_3$ und $Cr_{23}C_6$. Die sich über den Kohlenwasserstoff-Partialdruck einstellende teilweise Bildung von Chromkarbid wirkt sich wiederum günstig auf die Pulvereigenschaften aus. Mit den erfinderischen Verfahrensbedingungen ist weiters gewährleistet, dass sich das Chromkarbid mit dem in der Reaktionsmischung vorhandenen und/oder zugemischten Cr-Oxid / Cr-Hydroxid zu Cr umsetzt, wobei dieser Prozess bei $T_R$ dominiert.

Der Kohlenwasserstoff kann der Reaktion gasförmig, bevorzugt ohne Zumischen einer festen Kohlenstoffquelle zugegeben werden. Bevorzugt wird dabei die zumindest eine Verbindung der Gruppe bestehend aus Cr-Oxid und Cr-Hydroxid unter zumindest zeitweiser Einwirkung eines $H_2$-$CH_4$ Gasgemisches reduziert. Vorteilhaft wird ein $H_2/CH_4$ Volumenverhältnis im Bereich 1 bis 200, besonders vorteilhaft von 1,5 bis 20 gewählt. Die Einwirkung des $H_2$-$CH_4$ Gasgemisches erfolgt dabei bevorzugt zumindest zeitweise während der Aufheizphase auf $T_R$, wobei der Einfluss auf die Ausbildung der Pulverform insbesondere im Temperaturbereich 850 bis 1000°C sehr günstig ist. Wird eine Temperatur von ca. 1200°C erreicht, wird bevorzugt auf eine Rein-Wasserstoffatmosphäre, bevorzugt mit einem Taupunkt von < -40°C (gemessen im Bereich der Gaszufuhr) umgeschaltet. Liegt $T_R$ unter 1200°C erfolgt das Umschalten auf die Rein-Wasserstoffatmosphäre bevorzugt bei Erreichen von $T_R$. Die isotherme Phase auf $T_R$ und Abkühlen auf Raumtemperatur erfolgen vorteilhaft in einer Wasserstoffatmoshäre. Insbesondere beim Abkühlen ist es vorteilhaft, Wasserstoff mit einem Taupunkt < -40°C zu verwenden, um Rückoxidation zu vermeiden.

In einer Ausführungsvariante wird dem Cr-Oxid und/oder Cr-Hydroxid eine feste Kohlenstoffquelle zugemischt. Bevorzugt wird dabei pro Mol Sauerstoff in der Chromverbindung zwischen 0,75 und 1,25 Mol, vorzugsweise zwischen 0,90 und 1,05 Mol an Kohlenstoff eingesetzt. Dabei ist die Menge an für die Reaktion mit der Chromverbindung verfügbaren Kohlenstoff gemeint. In einer besonders bevorzugten Ausführungsvariante ist das Verhältnis O zu C mit etwa 0,98 leicht unterstöchiometrisch. Bevorzugt ist vorgesehen, dass die feste Kohlenstoffquelle ausgewählt ist aus der Gruppe Ruß, Aktivkohle, Graphit, kohlenstofffreisetzende Verbindungen oder Mischungen daraus. Als Beispiel für eine kohlenstofffreisetzende Verbindung können Chromkarbide, wie zum Beispiel $Cr_3C_2$, $Cr_7C_3$ und $Cr_{23}C_6$ genannt werden. Die Pulvermischung wird in einer $H_2$-haltigen Atmosphäre auf $T_R$ erhitzt. Der $H_2$-Druck wird dabei bevorzugt so eingestellt, dass sich zumindest im Temperaturbereich 800° bis 1050°C ein $CH_4$-Partialdruck von 5 bis 500 mbar ergibt. Die isotherme Phase auf $T_R$ und Abkühlen auf Raumtemperatur erfolgen wiederum vorteilhaft in einer Wasserstoffatmoshäre. Während dieser Prozessphasen ist die Anwesenheit von Kohlenwasserstoff nicht erforderlich. Wasserstoff verhindert während dieser Prozessphase und während der Abkühlphase Rückoxidationsprozesse. Während der Abkühlphase wird bevorzugt eine Wasserstoffatmosphäre mit einem Taupunkt < -40°C eingesetzt.

Vor der Reduktion kann das Cr-Oxid- oder Cr-Hydroxidpulver optional mit dem bereits zugesetzten Dotierstoff granuliert werden. Als Granulieren bezeichnet man wie bereits erwähnt das Verwandeln von kleinen Partikeln in ein Granulat, das ein Haufwerk der kleinen Partikeln darstellt. Als Granulierverfahren eignen sich beispielsweise Sprühgranulation oder Aufbaugranulationsverfahren in einem Intensivmischer unter Beigabe eines grenzflächenaktiven Zusatzes, beispielsweise Polyvinylpyrrolidon. Vorteilhaft ist ein Granulieren vor der Reduktion auch deshalb, da dadurch die Penetration der gasförmigen Edukte (zum Beispiel Wasserstoff) und der gasförmigen Produkte (zum Beispiel CO) verbessert wird, da zwischen den Granulatpartikeln Bereiche bestehen, wo die Gase ohne hohe Reibungsverluste durchströmen können.

Dem Cr-Oxid oder Cr-Hydroxid kann in vorteilhafter Weise vor der Reduktion, und insbesondere vorteilhaft, vor einem etwaigen Granulieren, der Dotierstoff zugemischt werden. Sc, Y und Lanthanoide (beispielsweise Lanthan oder Cer) können dabei in vorteilhafter Weise als Nitratlösung, Ti, Zr und Hf als Oxalatlösung zugemischt werden. Bei einem nachgelagerten Trocknungsprozess, der auch in den Reduktionsschritt integriert sein kann, zersetzt sich das Nitrat bzw. Oxalat in das entsprechende Oxid oder Hydroxid. Damit ist eine sehr feine und homogene Verteilung des Dotierstoffs möglich. Es ist jedoch auch möglich, die Dotierstoffe fest zuzumischen. Bei Sc, Y und den Lanthanoiden werden in vorteilhafter Weise oxidische Pulver eingesetzt. Ti, Zr und Hf sind sowohl in elementarer, oxidischer, als auch in Form anderer Verbindungen als ausreichend feine Pulver mit ausreichend niedriger Tendenz zur Agglomeratbildung verfügbar.

Wie bereits ausgeführt, ist es vorteilhaft, wenn Fe (zum Beispiel als elementares Fe oder Fe-Oxid) zum bereits reduzierten Cr-Pulver zugegeben wird. Dafür eignen sich übliche Verfahren, wie beispielsweise Misch- oder Mahlverfahren mit geringem Energieeintrag. Um eine Anbindung (zum Beispiel über Diffusion) von Fe-reichen Bereichen an die Cr-Partikeln zu erzielen, ist es vorteilhaft, wenn das Pulver oder Pulvergranulat nach dem Zumischen des Fe bei einer Temperatur T mit 400°C < T < 1200°C geglüht wird. Damit wird ein Entmischen des Pulvers bei der Weiterverarbeitung vermieden.

Im Folgenden wird die Erfindung anhand von Beispielen näher erläutert.

Figur 2     zeigt eine rasterelektronenmikroskopische Aufnahme eines $Cr_2O_3$ / Ruß Pulvergranulats.

Figur 3     zeigt eine rasterelektronenmikroskopische Aufnahme eines Pulvergranulats gemäß Figur 2 im reduzierten Zustand.

Figur 4     zeigt eine rasterelektronenmikroskopische Aufnahme des Pulvergranulats gemäß Figur 3 mit höherer Vergrößerung.

Figur 5     zeigt eine rasterelektronenmikroskopische Aufnahme der Oberfläche eines Cr-Partikels mit $Y_2O_3$-Teilchen gemäß Beispiel 2 (1,2 g $Y_2O_3$ Zugabe).

Figur 6     zeigt eine rasterelektronenmikroskopische Aufnahme der Oberfläche eines Cr-Partikels mit $Y_2O_3$-Teilchen gemäß Beispiel 2 (5,95 g $Y_2O_3$ Zugabe).

Figur 7     zeigt eine rasterelektronenmikroskopische Aufnahme der Oberfläche eines Cr-Partikels mit $Y_2O_3$-Teilchen gemäß Beispiel 3 ($Y(NO_3)_3 . 6 H_2O$) Konzentration bezogen auf 100 ml $H_2O_{deionisiert}$: 4,5 g).

Figur 8     zeigt eine rasterelektronenmikroskopische Aufnahme der Oberfläche eines Cr-Partikels mit $Y_2O_3$-Teilchen gemäß Beispiel 3 ($Y(NO_3)_3 . 6 H_2O$) Konzentration bezogen auf 100 ml $H_2O_{deionisiert}$: 20,2 g).

Figur 9     zeigt eine rasterelektronenmikroskopische Aufnahme der Oberfläche eines Cr-Partikels mit $Y_2O_3$-Teilchen gemäß Beispiel 3 ($Y(NO_3)_3 . 6 H_2O$) Konzentration bezogen auf 100 ml $H_2O_{deionisiert}$: 40,3 g).

Figur 10     zeigt eine rasterelektronenmikroskopische Aufnahme (Sekundärelektronenkontrast) eines Cr-Partikels gemäß Beispiel 1 mit zugemischten / anlegierten Fe-Partikeln.

Figur 11     zeigt eine rasterelektronenmikroskopische Aufnahme (Rückstreuelektronenkontrast) eines Cr-Partikels gemäß Beispiel 1 mit zugemischten und anlegierten Fe-Partikeln.

Figur 12     zeigt eine rasterelektronenmikroskopische Aufnahme (im Querschliff) eines Cr-Partikels mit Poren, die zum Teil mit $Fe_2O_3$ gefüllt sind gemäß Beispiel 5.

Figur 13     zeigt eine rasterelektronenmikroskopische Aufnahme eines Cr-Partikels mit anlegierten Fe Partikeln gemäß Beispiel 6.

Figur 14     zeigt eine rasterelektronenmikroskopische Aufnahme mit höherer Vergrößerung eines Pulvers gemäß Figur 13.

Figur 15     zeigt die relative Dichte von Grünlingen hergestellt aus CFY (Stand der Technik) und AS-113 (gemäß Erfindung) Pulver.

Figur 16     zeigt die Eisenverteilung (gemessen mittels EDX-Line-Scan) von gesinterten Proben hergestellt aus CFY (Stand der Technik, bezeichnet als Standard) und AS-113 (gemäß Erfindung) Pulver.

Figur 17a,b,d,c     zeigen rasterelektronenmikroskopische Aufnahmen erfindungsgemäßer Pulver mit Auswerterahmen für die quantitative Bildanalyse.

Beispiel 1

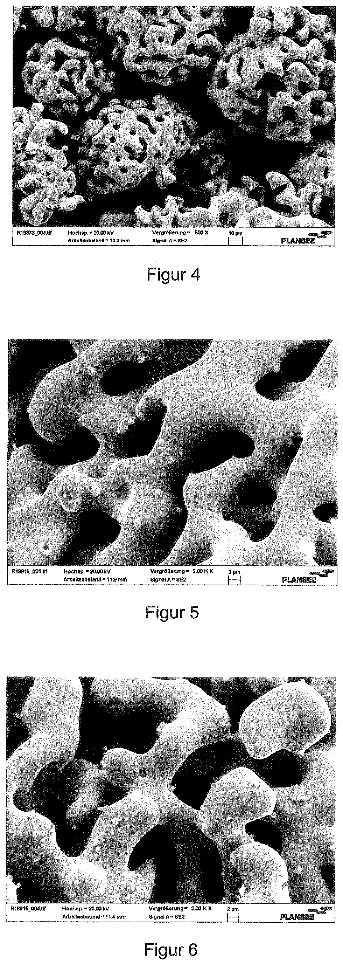

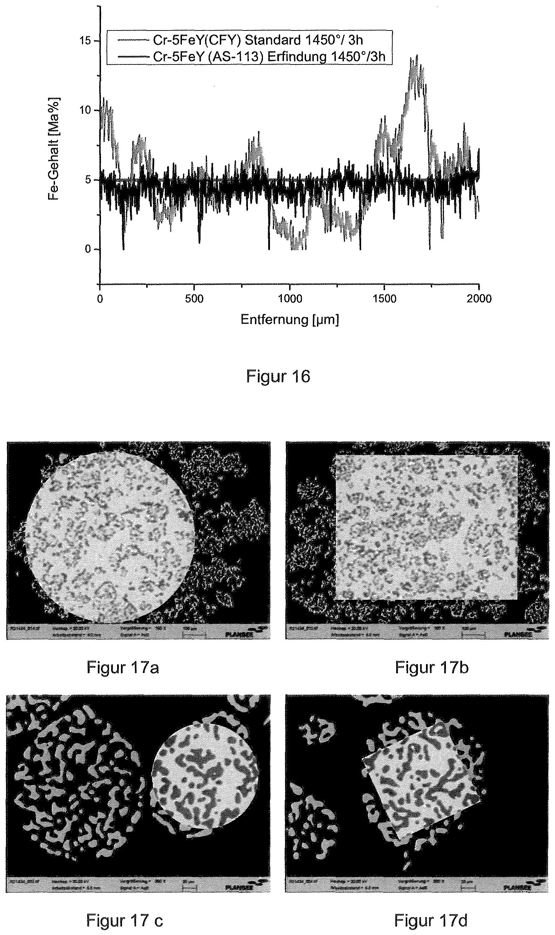

$Cr_2O_3$-Pulver mit Pigmentqualität der Type Lanxess Bayoxide CGN-R wurde in einem Diffusionsmischer mit Rußpulver der Type Thermax Ultra Pure N 908 der Firma Cancarb vermischt. Der Kohlenstoffgehalt der Mischung betrug 18,64 Ma%. Durch Zugabe von Wasser und 1,7 Ma% Paraffinwachs wurde ein Slurry hergestellt. Dieser Slurry wurde in einem Laborsprühturm zu Granulat (siehe Figur 2) verarbeitet. Das so hergestellte Granulat wurde mit 45 bis 160 μm abgesiebt. Danach wurde das Granulat mit einer Aufheizgeschwindigkeit von 10 K/min auf 800°C und danach mit einer Aufheizgeschwindigkeit von 2K/min auf 1050°C erhitzt. Das Aufheizen erfolgte unter Einwirkung von $H_2$, wobei der $H_2$-Druck so eingestellt wurde, dass im Temperaturbereich 800°C bis 1050°C der massenspektrometrisch gemessene $CH_4$-Partialdruck > 15 mbar betrug. Der Gesamtdruck betrug dabei ca. 1,1 bar. Danach wurde die Reaktionsmischung mit einer Aufheizgeschwindigkeit von 10 K/min auf 1450°C erhitzt. Die Haltezeit auf 1450°C betrug 5 h. Aufheizen von 1050°C auf 1450°C und Halten auf 1450°C erfolgten unter Zufuhr von trockenem Wasserstoff mit einem Taupunkt < -40°C, wobei der Druck ca. 1 bar betrug. Die Ofenabkühlung erfolgte ebenfalls unter $H_2$ mit einem Taupunkt < -40°C. Das so reduzierte Granulat wies äußerlich die Form und die Dimension des sprühgranulierten Granulats auf (Figur 3), jedoch innerlich ein Netzwerk von Poren wie dies in Figur 4 wiedergegeben ist. Gemäß der ASM Klassifikation für die Pulverform entspricht das Granulat der Einteilung porös. Die Porosität wurde wie in der Beschreibung detailliert ausgeführt, mittels quantitativer Bildanalyse durchgeführt, wobei als Messrahmen Kreise (siehe Figur 17a) und Rechtecke (siehe 17b) verwendet wurden. Es wurde die Porosität von 10 Partikeln bestimmt, wobei die Werte zwischen 74 Vol% und 76 Vol% lagen. Die mittlere Porosität betrug 75,3 Vol%. Die BET-Oberfläche wurde nach ISO 9277:1995 (Gerät: Gemini 2317 / Typ2, Entgasung bei 130°C / 2h in Vakuum, Adsorptiv: Stickstoff, volumetrische Auswertung über Fünfpunktbestimmung) bestimmt und betrug 0,10 m²/g. Die mittels Laserdiffraktometrie (gemäß ISO13320 (2009)) bestimmte Partikelgröße $d_{50}$ betrug 120 μm. In weiterer Folge wurde ein Pulverschliff angefertigt und im Querschliff an Cr-reichen Bereichen die mittlere (Mittelwert aus 10 Messungen) Nanohärte$_{HIT\ 0,005/5/1/5}$ (gemessen nach EN ISO 14577-1, Ausgabestand 2002, Berkovich-Eindringkörper und Auswerteverfahren nach Oliver und Pharr) bestimmt. Die Nanohärte$_{HIT\ 0,005/5/1/5}$ betrug 2,9 GPa.

Beispiel 2

1627,2 g $Cr_2O_3$-Pulver (Pigmentqualität Lanxess Bayoxide CGN-R), 372,8 g Ruß (Thermax Ultra Pure N 908 der Firma Cancarb), 1,2 g $Y_2O_3$ mit einer mittels Laserdiffraktometrie gemessenen Partikelgröße $d_{50}$ von 0,9 μm wurden in einem Attritor unter Zugabe von 1,5 l Isopropanol 3 Stunden gemahlen. Die Mahlkugeln waren dabei aus stabilisiertem $Y_2O_3$. Das Kugel zu Pulver Verhältnis betrug 6 : 1. Der so hergestellte Slurry wurde in Vakuum getrocknet und mit einer Aufheizgeschwindigkeit von 10 K/min auf 800°C und danach mit einer Aufheizgeschwindigkeit von 2K/min auf 1050°C erhitzt. Das Aufheizen erfolgte unter Einwirkung von $H_2$, wobei der $H_2$-Druck so eingestellt wurde, dass im Temperaturbereich 800°C bis 1050°C der massenspektrometrisch gemessene $CH_4$-Partialdruck > 15 mbar betrug. Der Gesamtdruck betrug dabei ca. 1 bar. Danach wurde die Reaktionsmischung mit einer Aufheizgeschwindigkeit von 10 K/min auf 1450°C erhitzt. Die Haltezeit auf 1450°C betrug 4,5 h. Aufheizen von 1050°C auf 1450°C und Halten auf 1450°C erfolgten unter Zufuhr von trockenem Wasserstoff mit einem Taupunkt < -40°C, wobei der Druck ca. 1 bar betrug. Die Ofenabkühlung erfolgte ebenfalls unter $H_2$ mit einem Taupunkt < -40°C. Danach wurde der Sinterkuchen zu einem Pulver gebrochen. In gleicher Weise wurden Pulver gefertigt, die anstelle von 1,2 g $Y_2O_3$ 1,2 g $TiO_2$ mit einer Partikelgröße von 0,5 μm, 1,2 g $ZrO_2$ mit einer Partikelgröße von 1,2 μm, bzw. 1,2 g $HfO_2$ mit einer Partikelgröße von 1,9 μm enthielten. Die so hergestellten Pulver weisen eine poröse Struktur auf und die Pulverform entspricht gemäß der ASM Klassifikation der Einteilung porös. Figur 5 zeigt beispielhaft für die mit $Y_2O_3$ dotierte Variante die Partikeloberfläche. Auf der Oberfläche der Cr-haltigen porösen Partikel sind feine Teilchen mit einem mittleren Teilchendurchmesser < 1 μm erkennbar. Diese Teilchen sind gleichmäßig auf der Oberfläche verteilt. Auch die mit $TiO_2$, $HfO_2$ und $ZrO_2$ dotierten Varianten zeigen eine feine und gleichmäßige Verteilung der Dotierstoffe. Die chemische Analyse für die mit $Y_2O_3$ dotierte Variante ergab 291 μg/g C, 1320 μg/g O und 1128 μg/g Y, Rest Cr und übliche Verunreinigungen. Die Porosität der mit $Y_2O_3$ dotierte Variante wurde, wie in der Beschreibung detailliert ausgeführt, mittels quantitativer Bildanalyse durchgeführt, wobei als Messrahmen Kreise (siehe Figur 17c) und Rechtecke (siehe 17d) verwendet wurden. Es wurde die Porosität von 10 Partikeln bestimmt, wobei die Werte zwischen 61 Vol% und 75 Vol% lagen. Die mittlere Porosität betrug 67,1 Vol%.

In einer weiteren Variante wurden anstelle von 1,2 g 5,95 g $Y_2O_3$ zugegeben. Die weitere Fertigung erfolgte wie zuvor beschrieben. Gemäß Figur 6 sind die Cr-Partikeln wiederum hoch porös. Auf der Oberfläche sind fein verteilt $Y_2O_3$-Teilchen mit einer mittleren Teilchengröße von < 1,5 μm erkennbar. Das Ergebnis der chemischen Analyse erbrachte 288 μg/g C, 2076 μg/g O und 4049 μg/g Y.

Beispiel 3

1632,6 g $Cr_2O_3$ (Pigmentqualität Lanxess Bayoxide CGN-R) wurde mit 367,4 g Ruß in einem Diffusionsmischer vermischt. Während des Mischvorgangs wurde eine wässrige Yttriumnitrat ($Y(NO_3)_3$.6 $H_2O$) Lö-

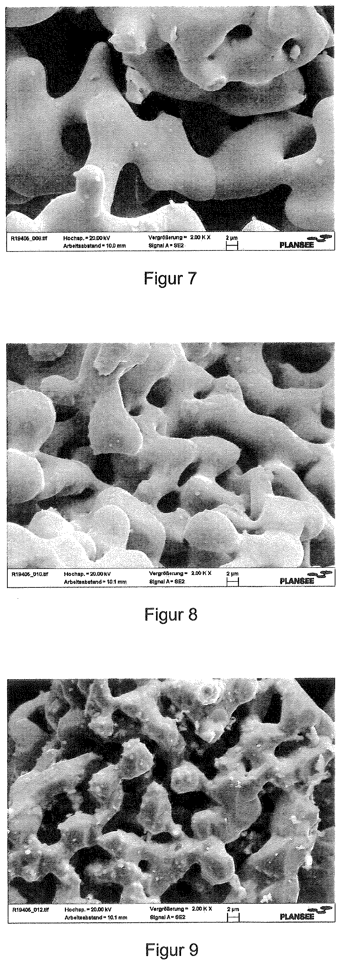

sung mittels Sprühtechnik zugegeben. Dabei wurden drei unterschiedliche Chargen hergestellt, die sich in der $(Y(NO_3)_3.6\ H_2O)$ Konzentration unterschieden. Diese Konzentration, bezogen auf jeweils 100 ml deionisierten Wasser, betrug 4,5 g, 20,2 g bzw. 40,3 g. Die so hergestellten Mischungen wurden in einem Vakuumofen getrocknet und mit einer Aufheizgeschwindigkeit von 10 K/min auf 800°C und danach mit einer Aufheizgeschwindigkeit von 2K/min auf 1050°C erhitzt. Das Aufheizen erfolgte unter Einwirkung von $H_2$, wobei der $H_2$-Druck so eingestellt wurde, dass im Temperaturbereich 800°C bis 1050°C der massenspektrometrisch gemessene $CH_4$-Partialdruck > 15 mbar betrug. Der Gesamtdruck betrug dabei ca. 1 bar. Danach wurde die Reaktionsmischung mit einer Aufheizgeschwindigkeit von 10 K/min auf 1450°C erhitzt. Die Haltezeit auf 1450°C betrug 7 h. Aufheizen von 1050°C auf 1450°C und Halten auf 1450°C erfolgten unter Zufuhr von trockenem Wasserstoff mit einem Taupunkt < -40°C, wobei der Druck ca. 1 bar betrug. Die Ofenabkühlung erfolgte ebenfalls unter $H_2$ mit einem Taupunkt < -40°C. Wiederum wurden Cr-Partikel erhalten, die gemäß ASM Einteilung als porös zu klassifizieren sind. Die jeweiligen Partikeloberflächen sind in den Figuren 7, 8 und 9 wiedergegeben. In allen drei Fällen betrug die mittlere $Y_2O_3$-Teilchengröße < 1 $\mu$m. Weiters ist erkennbar, dass die Teilchen sehr gleichmäßig verteilt vorliegen. Die BET-Oberfläche betrug 0,10 $m^2$/g (4,5 g Zugabe), 0,14 $m^2$/g (20,2 g Zugabe) und 0,18 $m^2$/g (40,3 g Zugabe) und die mittels Laserdiffraktometrie bestimmte Partikelgröße $d_{50}$ betrug für alle drei Varianten ca. 130 $\mu$m. In weiterer Folge wurde ein Pulverschliff angefertigt und im Querschliff an Cr-reichen Bereichen die mittlere (Mittelwert aus 10 Messungen) Nanohärte$_{HIT\ 0,005/5/1/5}$ bestimmt. Die Nanohärte$_{HIT\ 0,005/5/1/5}$ betrug 3,0 GPa (4,5 g Zugabe), 3,0 GPa (20,2 g Zugabe) und 3,1 GPa (40,3 g Zugabe).

Beispiel 4

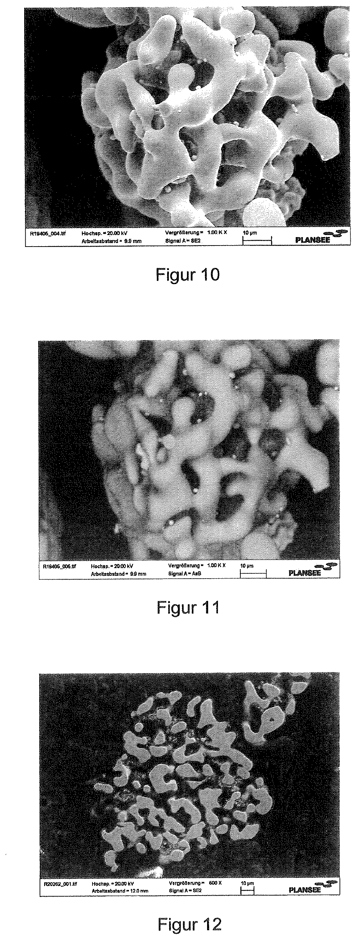

Pulver, hergestellt nach den Beispielen 1 bis 3, wurden in einem Diffusionsmischer mit 2, 5, bzw.10 Ma% Fe-Pulver (mittels Laserdiffraktometrie gemessene Partikelgröße $d_{50}$ ca. 8 $\mu$m) vermischt. Die so hergestellten Mischungen wurden in einem Ofen unter Wasserstoffatmosphäre bei 1000°C / 30 min. geglüht. Durch die Verwendung des porösen Cr-Pulvers, dem Einmischen und Diffusionsglühen ist es zum einen möglich, die Fe-Partikel teilweise in die Poren der Cr-Partikel einzubringen, und zum anderen diese durch die Glühung mittels einer Diffusionsbindung (sogenanntes anlegiertes Pulver) zu fixieren. Beispielhaft (Cr-Pulver gemäß Beispiel 1) ist so hergestelltes Pulver in den Figuren 10 und 11 wiedergegeben.

Beispiel 5

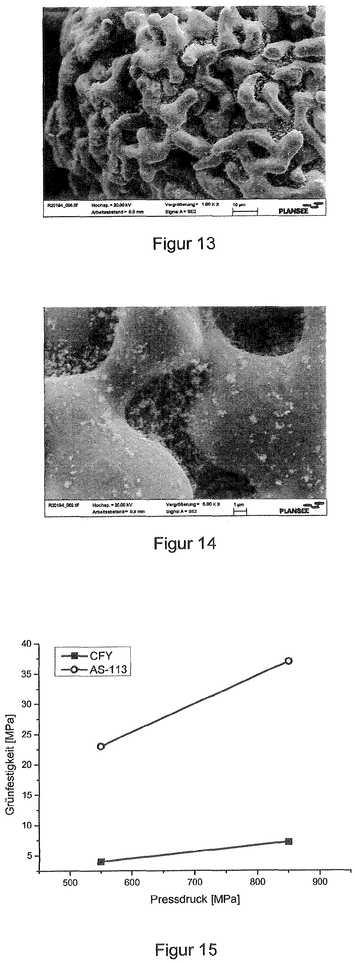

Pulver, hergestellt nach den Beispielen 1 bis 3, wurde mit $Fe_2O_3$-Pulver (Partikelgröße gemessen nach Fisher von 0,17 $\mu$m) vermengt. Das Cr zu Fe Verhältnis in Ma% betrug 95 zu 5. Die feinen $Fe_2O_3$-Partikel konnten wiederum in die Poren der porösen Cr-Partikel eindringen (Figur 12), wodurch es zu einer sehr homogenen Verteilung von $Fe_2O_3$ im Cr kam. Die Pulvermischung wurde bei einer Temperatur von 600°C / 4h in $H_2$ reduziert (Reduktion des $Fe_2O_3$ zu Fe). Zudem bewirkt die Wärmebehandlung, dass die reduzierten Fe-Partikel über eine Diffusionsbindung auf der Oberfläche der Cr-Partikel anhaften (anlegiertes Pulver). Figur 13 und 14 geben die Cr-haltigen Partikeln mit anlegierten Fe-Partikeln mit unterschiedlichen Vergrößerungen wieder.

Beispiel 6

Ein Cr-FeY Pulver (Bezeichnung CFY), hergestellt gemäß der EP 1 268 868(A1), mit einem Fe-Gehalt von 5 Ma%, einem $Y_2O_3$-Gehalt von 0,11 Ma%, einer Korngröße $d_{50}$ von 132 $\mu$m und einer BET-Oberfläche von 0,03 $m^2$/g wurde mit 0,6 Ma% Presswachs vermischt und zu Biegeproben mit den Abmessungen 31,5 mm x 12,7 mm x 6 mm mit einem Pressdruck von 550 MPa bzw. 850 MPa. gepresst. Ein Cr-$Y_2O_3$ Pulver mit 0,11 Ma% $Y_2O_3$ wurde wie im Beispiel 2 beschrieben hergestellt. Zu diesem Pulver wurde $Fe_2O_3$ Pulver zugegeben, wobei das Cr:Fe Ma%-Verhältnis 95:5 betrug. Das Pulver wurde anschließend bei 600°C / 4h reduziert. Die mit 45 bis 250$\mu$m abgesiebte Fraktion wurde mit 0,6 Ma% Presswachs vermengt. Aus diesem Pulver (Bezeichnung: AS-113) wurden ebenfalls Biegeproben mit den Abmessungen 31,5 mm x 12,7 mm x 6 mm bei 550 bzw. 850 MPa gepresst. Die Grünfestigkeit wurde nach ASTM B 312-09 mittels 3-Punkt Biegeversuch bestimmt. Mit dem Pulver gemäß Erfindung wurde eine deutliche Verbesserung der Grünfestigkeit erzielt (siehe Figur 15).

Beispiel 7

Die bei 550 MPa gepressten Biegeproben gemäß Beispiel 6 wurden einer Sinterung in $H_2$-Atmosphäre bei 1450°C / 180 min. unterzogen. Die Eisenkonzentration wurde mittels EDX über eine Distanz von 2000 $\mu$m bestimmt. Wie aus Figur 16 (CFY-Stand der Technik, AS-113- erfindungsgemäß) hervorgeht, ist die Eisenverteilung unter Verwendung des erfindungsgemäßen Pulvers AS-113 weitaus homogener und gleichmäßiger als im Falle des Stand der Technik Pulvers CFY.

**Patentansprüche**

1. Pulver oder Pulvergranulat mit einem Cr-Gehalt > 80 Ma%, das 2 bis 20 Ma% Fe, optional bis 5 Ma% Dotierstoff und optional bis 2 Ma% O enthält, wobei das Pulver oder Pulvergranulat Cr-reiche Bereiche mit einem Cr-Gehalt > 95 Ma% umfasst, die Cr-enthaltende Partikel bilden,
   **dadurch gekennzeichnet, dass** die Cr-enthaltenden Partikel eine mittlere, mittels quantitativer Bildanalyse gemäß Beschreibung bestimmte Porosität > 20 Vol% aufweisen, wobei das Pulver oder Pulvergranulat Fe-reiche Bereiche mit einem Fe-Gehalt > 60 Ma% umfasst.

2. Pulver oder Pulvergranulat nach Anspruch 1, **dadurch gekennzeichnet, dass** die Cr-enthaltenden Partikel eine mittels Laserdiffraktometrie gemäß IS0 13320 (2009) gemessene Partikelgröße $d_{50}$ > 20 µm und eine mittels BET gemäß ISO 9277:1995 gemessene Oberfläche > 0,05 $m^2$/g aufweisen.

3. Pulver oder Pulvergranulat nach einem der vorangehenden Ansprüche, **dadurch gekennzeichnet, dass** die Poren zumindest bereichsweise offenporig vernetzt sind.

4. Pulver oder Pulvergranulat nach einem der vorangehenden Ansprüche, **dadurch gekennzeichnet, dass** das Pulver oder Pulvergranulat 0,005 bis 5 Ma% zumindest eines Dotierstoffs ausgewählt aus der Gruppe bestehend aus Sc, Y, Lanthanoide, Ti, Zr und Hf enthält.

5. Pulver oder Pulvergranulat nach einem der vorangehenden Ansprüche, **dadurch gekennzeichnet, dass** das Pulver oder Pulvergranulat 0,002 bis 2 Ma% O enthält.

6. Pulver oder Pulvergranulat nach einem der vorangehenden Ansprüche, **dadurch gekennzeichnet, dass** die Fe-reichen Bereiche zumindest teilweise als Fe enthaltende Partikel vorliegen.

7. Pulver oder Pulvergranulat nach einem der vorangehenden Ansprüche, **dadurch gekennzeichnet, dass** die Fe-reichen Bereiche zumindest in einer Form vorliegen ausgewählt aus der Gruppe bestehend aus ungebundenes/elementares Fe und Fe-Oxid.

8. Pulver oder Pulvergranulat nach einem der vorangehenden Ansprüche, **dadurch gekennzeichnet, dass** die Fe-reichen Bereiche zumindest teilweise in den Poren der Cr-enthaltenden Partikeln eingelagert sind.

9. Pulver oder Pulvergranulat nach einem der vorangehenden Ansprüche, **dadurch gekennzeichnet, dass** die Fe-reichen Bereiche mit den Cr-enthaltenden Partikeln zumindest teilweise über eine Diffusionsverbindung verbunden sind.

10. Pulver oder Pulvergranulat nach einem der vorangehenden Ansprüche, **dadurch gekennzeichnet, dass** der Dotierstoff zumindest teilweise als Oxid in Form von Teilchen vorliegt.

11. Pulver oder Pulvergranulat nach einem der vorangehenden Ansprüche, **dadurch gekennzeichnet, dass** der Dotierstoff zumindest in einer Form vorliegt ausgewählt aus der Gruppe bestehend aus "eingelagert in den Cr-enthaltenden Partikeln" und "angelagert auf der Oberfläche der Cr-enthaltenden Partikeln".

12. Pulver oder Pulvergranulat nach einem der vorangehenden Ansprüche, **dadurch gekennzeichnet, dass** die Cr-reichen Bereiche eine Nanohärte$_{HIT 0,005/5/1/5}$ nach EN ISO 14577-1 von $\leq$ 4 GPa aufweisen.

13. Pulver oder Pulvergranulat nach einem der vorangehenden Ansprüche, **dadurch gekennzeichnet, dass** das Pulver oder Pulvergranulat eine mittels Laserdiffraktometrie gemessene Partikelgröße / Granulatgröße $d_{50}$ von 10 µm < $d_{50}$ < 800 µm aufweist.

14. Verwendung des Pulvers oder Pulvergranulats nach einem der vorangehenden Ansprüche zur pulvermetallurgischen Herstellung eines Bauteils.

15. Verfahren zur Herstellung eines Pulvers oder Pulvergranulats nach einem der Ansprüche 1 bis 13, **dadurch gekennzeichnet, dass** dieses die Reduktion bei 1100 bis 1550°C zumindest einer Cr-haltigen Verbindung ausgewählt aus der Gruppe bestehend aus Oxide und Hydroxide in zumindest teilweiser zeitlicher Anwesenheit einer Kohlenstoffquelle und Wasserstoff umfasst und ein Fe-haltiges Pulver mit einem Fe-Gehalt > 60 Ma% nach der Reduktion zugegeben wird.

16. Verfahren nach Anspruch 15, **dadurch gekennzeichnet, dass** der Cr-haltigen Verbindung vor der Reduktion der Dotierstoff zugemischt wird.

17. Verfahren nach Anspruch 15 oder 16, **dadurch gekennzeichnet, dass** das Pulver oder Pulvergranulat nach der Zugabe des Fe-haltigen Pulvers bei einer Temperatur T mit 400°C < T < 1200°C geglüht wird.

18. Verfahren nach einem der Ansprüche 15 bis 17, **dadurch gekennzeichnet, dass** die Cr-haltige Verbindung alleine oder optional gemeinsam mit dem Dotierstoff granuliert wird.

**Claims**

1. Powder or powder granulate having a chromium content > 80 Ma%, which contains 2 to 20 Ma% iron, optionally up to 5 Ma% dopant, and optionally up to 2 Ma% oxygen, wherein the powder or powder granulate comprises chromium-rich regions having a chromium content > 95 Ma%, which form chromium-containing particles,
**characterized in that** the chromium-containing particles have a mean porosity, which is determined by means of quantitative image analysis according to the description, of > 20 Vol%, wherein the powder or powder granulate comprises iron-rich regions having an iron content > 60 Ma%.

2. Powder or powder granulate according to claim 1, **characterized in that** the chromium-containing particles have a particle size $d_{50}$ > 20 $\mu$m, which is measured by means of laser diffractometry according to IS0 13320 (2009) and a surface area > 0.05 $m^2$/g, which is measured by means of BET according to ISO 9277:1995.

3. Powder or powder granulate according to any one of the preceding claims, **characterized in that** the pores are at least regionally open-pored and cross-linked.

4. Powder or powder granulate according to any one of the preceding claims, **characterized in that** the powder or powder granulate contains 0.005 to 5 Ma% of at least one dopant selected from the group consisting of scandium, yttrium, lanthanides, titanium, zirconium, and hafnium.

5. Powder or powder granulate according to any one of the preceding claims, **characterized in that** the powder or powder granulate contains 0.002 to 2 Ma% oxygen.

6. Powder or powder granulate according to any one of the preceding claims, **characterized in that** the iron-rich regions are at least partially provided as iron-containing particles.

7. Powder or powder granulate according to any one of the preceding claims, **characterized in that** the iron-rich regions are provided at least in one form selected from the group consisting of unbound/elementary iron and iron oxide.

8. Powder or powder granulate according to any one of the preceding claims, **characterized in that** the iron-rich regions are at least partially intercalated in the pores of the chromium-containing particles.

9. Powder or powder granulate according to any one of the preceding claims, **characterized in that** the iron-rich regions are connected to the chromium-containing particles at least partially via a diffusion connection.

10. Powder or powder granulate according to any one of the preceding claims, **characterized in that** the dopant is provided at least partially as an oxide in the form of particles.

11. Powder or powder granulate according to any one of the preceding claims, **characterized in that** the dopant is provided at least in one form selected from the group consisting of "intercalated in the chromium-containing particles" and "deposited on the surface of the chromium-containing particles".

12. Powder or powder granulate according to any one of the preceding claims, **characterized in that** the chromium-rich regions have a nanohardness $HIT_{0.005/5/1/5}$ according to EN ISO 14577-1 of ≤ 4 GPa.

13. Powder or powder granulate according to any one of the preceding claims, wherein the powder or powder granulate has as a particle size/granulate size of 10 $\mu$m < $d_{50}$ < 800 $\mu$m, measured by laser diffractometry.

14. Use of the powder or powder granulate according to any one of the preceding claims for the powder-metallurgy production of a component.

15. Method for producing a powder or powder granulate according to any one of the claims 1 - 13 , **characterized in that** this method comprises the reduction at 1100 to 1550°C of at least one chromium-containing compound selected from the group consisting of oxides and hydroxides in at least partial chronological presence of a carbon source and hydrogen and **in that** an iron-containing powder having an iron content > 60 Ma% is added after the reduction.

16. Method according to Claim 15, **characterized in that** the dopant is admixed to the chromium-containing compound before the reduction.

17. Method according to Claim 15 or 16, **characterized in that** the powder or powder granulate, after the addition of the iron-containing powder, is annealed at a temperature T with 400°C < T < 1200°C.

18. Method according to any one of Claims 15 to 17, **characterized in that** the chromium-containing compound is granulated alone or optionally jointly with the dopant.

**Revendications**

1. Poudre ou poudre granulée ayant une teneur en Cr > 80 % en masse, qui contient 2 à 20 % en masse de Fe, éventuellement jusqu'à 5 % en masse d'un dopant et éventuellement jusqu'à 2 % en masse d'O, la poudre ou la poudre granulée comprenant des zones riches en Cr ayant une teneur en Cr > 95 % en masse, qui forment des particules contenant du Cr, **caractérisée en ce que** les particules contenant du Cr présentent une porosité moyenne, déterminée par analyse d'image quantitative selon la description, > 20 % en volume, la poudre ou la poudre granulée comprenant des zones riches en Fe ayant une teneur en Fe > 60 % en masse.

2. Poudre ou poudre granulée selon revendication 1, **caractérisée en ce que** les particules contenant du Cr présentent une taille de particule $d_{50}$ mesurée par diffractométrie laser selon ISO 13320 (2009) > 20 $\mu$m et une surface mesurée par BET selon ISO 9277:1995 > 0,05 $m^2$/g.

3. Poudre ou poudre granulée selon l'une quelconque des revendications précédentes, **caractérisée en ce que** les pores sont interconnectés au moins en zones sous la forme de pores ouverts.

4. Poudre ou poudre granulée selon l'une quelconque des revendications précédentes, **caractérisée en ce que** la poudre ou la poudre granulée contient 0,005 à 5 % en masse d'au moins un dopant choisi dans le groupe constitué par Sc, Y, les lanthanides, Ti, Zr et Hf.

5. Poudre ou poudre granulée selon l'une quelconque des revendications précédentes, **caractérisée en ce que** la poudre ou la poudre granulée contient 0,002 à 2 % en masse d'O.

6. Poudre ou poudre granulée selon l'une quelconque des revendications précédentes, **caractérisée en ce que** les zones riches en Fe se présentent au moins en partie sous la forme de particules contenant du Fe.

7. Poudre ou poudre granulée selon l'une quelconque des revendications précédentes, **caractérisée en ce que** les zones riches en Fe se présentent au moins sous une forme choisie dans le groupe constitué par le Fe non lié/élémentaire et l'oxyde de Fe.

8. Poudre ou poudre granulée selon l'une quelconque des revendications précédentes, **caractérisée en ce que** les zones riches en Fe sont au moins partiellement insérées dans les pores des particules contenant du Cr.

9. Poudre ou poudre granulée selon l'une quelconque des revendications précédentes, **caractérisée en ce que** les zones riches en Fe sont reliées avec les particules contenant du Cr au moins partiellement par une liaison de diffusion.

10. Poudre ou poudre granulée selon l'une quelconque des revendications précédentes, **caractérisée en ce que** le dopant se présente au moins en partie en tant qu'oxyde sous la forme de particules.

11. Poudre ou poudre granulée selon l'une quelconque des revendications précédentes, **caractérisée en ce que** le dopant se présente au moins sous une forme choisie dans le groupe constitué par « inséré dans les particules contenant du Cr » et « déposé sur la surface des particules contenant du Cr ».

12. Poudre ou poudre granulée selon l'une quelconque des revendications précédentes, **caractérisée en ce que** les zones riches en Cr présentent une nanodureté$_{HIT\,0,005/5/1/5}$ selon EN ISO 14577-1 $\leq$ 4 GPa.

13. Poudre ou poudre granulée selon l'une quelconque des revendications précédentes, **caractérisée en ce que** la poudre ou la poudre granulée présente une taille de particule/taille de granulat $d_{50}$ mesurée par diffractométrie laser de 10 $\mu$m < $d_{50}$ < 800 $\mu$m.

14. Utilisation de la poudre ou de la poudre granulée selon l'une quelconque des revendications précédentes pour la fabrication d'un composant par métallurgie des poudres.

15. Procédé de fabrication d'une poudre ou d'une poudre granulée selon l'une quelconque des revendications 1 à 13, **caractérisé en ce que** celui-ci comprend la réduction à une température de 1 100 à 1 550 °C d'au moins un composé contenant du Cr choisi dans le groupe constitué par les oxydes et les hydroxydes en la présence au moins partielle dans le temps d'une source de carbone et d'hydrogène, et une poudre contenant du Fe ayant une teneur en Fe > 60 % en masse est ajoutée après la réduction.

16. Procédé selon la revendication 15, **caractérisé en ce que** le dopant est incorporé dans le composé contenant du Cr avant la réduction.

17. Procédé selon la revendication 15 ou 16, **caractérisé en ce que** la poudre ou la poudre granulée est recuite à une température T telle que 400 °C < T < 1 200 °C après l'ajout de la poudre contenant du Fe.

18. Procédé selon l'une quelconque des revendications 15 à 17, **caractérisé en ce que** le composé contenant du Cr est granulé seul ou éventuellement conjointement avec le dopant.

**One-dimensional**

Acicular:
Chemical
  decomposition

Irregular rod-like:
Chemical decomposition, mechanical
  comminution

**Two-dimensional**

Dendritic:
Electrolytic

Flake:
Mechanical
  comminution

**Three-dimensional**

Spherical:
Atomization,
  carbonyl
  precipitation
  from a liquid

Nodular:
Atomization,
  chemical
  decomposition

Irregular:
Atomization,
  chemical
  decomposition

Porous:
Reduction of
  oxides

Figur 1

Figur 2

Figur 3

14

Figur 4

Figur 5

Figur 6

Figur 7

Figur 8

Figur 9

Figur 10

Figur 11

Figur 12

Figur 13

Figur 14

Figur 15

Figur 16

Figur 17a

Figur 17b

Figur 17 c

Figur 17d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1268868 A1
- US 2013129557 A
- EP 2230707 A
- DE 102008042047

**In der Beschreibung aufgeführte Nicht-Patentliteratur**

- Powder Metallurgy. ASM Handbook. vol. 7, 472